# EUROPEAN PATENT APPLICATION

(11) **EP 4 617 714 A1**
(43) Date of publication of application: **17.09.2025**
(21) Application number: 22966916.3
(22) Date of filing: 01.12.2022
(51) Int. Cl.: G01S 7/481, G01S 7/487, G01S 17/894, G01S 7/493, G01S 7/4911

(54) **DETECTION METHOD, ARRAY DETECTOR, ARRAY TRANSMITTER, DETECTION APPARATUS AND TERMINAL**

(71) Applicant: Shenzhen Yinwang Intelligent Technologies Co., Ltd., Shenzhen, Guangdong 518129 (CN)
(72) Inventor: HAN, Erjiang, Shenzhen, Guangdong 518129 (CN); SHI, Xianling, Shenzhen, Guangdong 518129 (CN); CAO, Guoliang, Shenzhen, Guangdong 518129 (CN)
(74) Representative: Gill Jennings & Every LLP
(86) International application number: PCT/CN2022/136036
(87) International publication number: WO 2024/113328

(57) **Abstract**

A detection method, an array detector, an array transmitter, a detection apparatus, and a terminal are provided, and may be applied to fields such as detection, intelligent mapping, and intelligent driving. **In** this application, for a plurality of detection signals, a receiving area is dynamically adjusted to receive an echo signal and/or a transmitting area is dynamically adjusted to transmit a detection signal, to improve a possibility of capturing an echo light spot whose position shifts and/or whose energy is dispersed, reduce an energy loss caused by a shift of the light spot, and improve detection precision of the detection apparatus.

## Description

### TECHNICAL FIELD

This application relates to the field of optical detection technologies, and in particular, to a detection method, an array detector, an array transmitter, a detection apparatus, and a terminal.

### BACKGROUND

With development of information technologies and computer vision, a detection technology develops rapidly, and various detection apparatuses bring great convenience to people's life and travel. A detection apparatus may be paralleled to an "eye" for sensing an environment, and includes visual sensors such as a camera, and radar sensors such as a millimeter-wave radar, a lidar, and an ultrasonic radar. A lidar (light detection and ranging, Lidar, light detection and ranging) technology has obvious advantages in a detection range, ranging precision, and reliability, and has a feature of near-all-weather work. A lidar is a key sensor in the sensing field, and plays an important role in fields such as intelligent driving, intelligent transportation, mapping, and intelligent manufacturing.

When the lidar performs detection, a transmit end transmits a plurality of detection signals. The plurality of detection signals are separately irradiated onto a target in a field of view, and are reflected on the target in the field of view, to obtain echo signals that respectively correspond to the plurality of detection signals. Light spots of the echo signals may fall on a detector, and the detector receives the echo signals and obtains energy of the echo signals, to obtain related information of the target.

The detector of the lidar is usually implemented as an array detector including a plurality of detection elements. A position at which the light spot of the echo signal falls on the array detector is related to a distance for the target and a pointing angle of the target (namely, a position of the target in the field of view). In view of this, energy obtained at different positions of the array detector is processed, so that related information of the target within a corresponding distance and a corresponding pointing angle can be obtained, and distance compensation and reflectivity compensation are performed in a targeted manner, to improve detection accuracy.

However, due to problems such as changes in a temperature of an external environment and the distance for the target and aging of an optical device, a shift often occurs on the position of the light spot of the echo signal on the array detector. The shift of the light spot is not only an overall shift, but also accompanied by splitting and dispersion of the light spot. As a result, the light spot is prone to shift out of an area in which the energy of the echo signal can be received, causing exception of subsequent distance compensation and reflectivity compensation and affecting detection precision of the lidar.

### SUMMARY

Embodiments of this application provide a detection method, an array detector, an array transmitter, a detection apparatus, and a terminal, so that an energy loss caused by a shift of a light spot can be reduced and detection precision of the detection apparatus can be improved.

**According to a first aspect,** an embodiment of this application provides a detection method, including:
in a first area of the array detector, receiving a first echo signal and obtaining energy of the first echo signal, where the first echo signal corresponds to a first detection signal, and the first detection signal is sent at a first moment; and
in a second area of the array detector, receiving a second echo signal and obtaining energy of the second echo signal, where the second echo signal corresponds to a second detection signal, and the second detection signal is sent at a second moment.

The first area and the second area are included in the array detector, the first area and the second area each include at least two detection elements, and the first area and the second area do not completely overlap.

Optionally, the foregoing method may be applied to the array detector or a controller. The controller may control the array detector, and the array detector includes a plurality of detection elements.

In the embodiment of this application, the first area and the second area do not completely overlap. In other words, there is an offset between the first area and the second area. When receiving the echoes of the detection signal transmitted at the first moment and the detection signal transmitted at the second moment, the array detector may adjust a position of the receiving area through dynamically shifting. When a shift may occur on the light spot, a change in distribution of the light spot may be adapted through the dynamic adjustment of the receiving area, so that an echo light spot whose position is shifted and/or whose energy is dispersed can be captured, an energy loss caused by the shift of the light spot of the echo signal is reduced, and the detection precision of the detection apparatus is improved.

**In a possible implementation of the first aspect,** the first detection signal and the second detection signal are signals transmitted within a same period of detection time.

Optionally, one period of detection time may be one slot (slot), one beam position, one probe frame, or one probe subframe. The slot is a minimum time unit in a detection process, and a plurality of pulse signals may be transmitted in one slot.

The beam position is related to time for the detection signal to complete detection and scanning once in one direction. For example, a pitch angle of the detection apparatus in a vertical direction is 0° to 20°, and a beam width of the detection signal transmitted by the detection apparatus is 5°. In this case, at least four beam positions are required to cover an entire pitch domain.

The probe frame is an image obtained through completing scanning of a full field of view once by the detection apparatus. One probe frame usually generates one point cloud image.

The probe subframe is obtained by dividing the probe frame. In some scenarios, for a two-dimensional scanning detection apparatus, completing scanning in one direction is a probe subframe, and completing scanning in two directions is a probe frame. For example, in the detection apparatus that performs detection in the form of row scanning, a period of time spent on completing scanning one row is referred to as a probe subframe (or a beam position), and completing detection of the full field of view is referred to as a probe frame. For another example, in a detection apparatus that performs detection in a form of point scanning, a period of time spent on completing detection of one "point" is referred to as a probe subframe (or a beam position), and completing detection of the full field of view is referred to as a probe frame.

**In a possible implementation of the first aspect,** the detection apparatus transmits a plurality of detection signals in a period of time to detect a same detection area (or a detection area whose angle is less than angular resolution), and the first detection signal and the second detection signal belong to the plurality of detection signals transmitted in the same period of time.

**In a possible implementation of the first aspect,** the first area and a reference receiving area completely overlap, an offset between the second area and the reference receiving area is a first distance, the first distance is a multiple of a unit width, and the unit width is a minimum resolution unit of the array detector.

The reference receiving area is an area in which the echo signal of the first detection signal and the echo signal of the second detection signal are received in a first environment condition, the reference receiving area is included in the array detector, and the first environment condition is a predefined working environment of the array detection.

Alternatively, the reference receiving area may be considered as a desirable receiving position of the light spot. Optionally, the reference receiving area may be preconfigured or predefined, for example, written by a manufacturer, development personnel, or test personnel.

In the foregoing embodiment, during dynamic shifting, a part of the receiving area and the reference receiving area overlap, and other part of the receiving area shifts by using the reference receiving area as an anchor point. It is considered that a shift may not occur on the echo light spot, and even if the shift occurs, a shifted echo light spot may still fall near the reference receiving area. Therefore, in the foregoing implementation, echo energy receiving efficiency can be improved, an effective proportion of a signal can be increased, and detection precision can be improved.

**In a possible implementation of the first aspect,** an offset between the first area and a preset reference receiving area is a second distance, an offset between the second area and the reference receiving area is a third distance, the second distance and the third distance are different multiples of a unit width, and the unit width is a minimum resolution unit of the array detector.

In the foregoing implementation, during dynamic shifting, a shifted area shifts by using the reference receiving area as an anchor point. It is considered that a shifted echo light spot may still fall near the reference receiving area. In the foregoing implementation, echo energy receiving efficiency can be improved, an effective proportion of a signal can be increased, and detection precision can be improved.

**In a possible implementation of the first aspect,** a temperature of an environment in which the array detector currently works is higher than a first temperature threshold.

When the temperature is higher than or equal to the first temperature threshold, an area, of the array detector, on which the first echo signal and the second echo signal fall deviates from the reference receiving area.

A change of temperature is an important factor that causes the shift of the echo light spot. In the foregoing implementation, when the temperature is higher than or equal to the first temperature threshold, the echo light spot may deviate from the reference receiving area. Therefore, when the temperature is higher than or equal to the first threshold, the energy of the echo light spot can be received more accurately by dynamically shifting the receiving area, to reduce the energy loss caused by the shift of the light spot, and improve the detection precision of the detection apparatus.

**In a possible implementation of the first aspect,** in a first direction, a pointing angle of the first detection signal and a pointing angle of the second detection signal fall within a first angle range, and the first angle range is some angles in a field of view range.

The field of view range is a field of view of the detection apparatus. A plurality of detection signals of different angles may usually be transmitted to complete detection of the field of view range. A detection apparatus in a form of row scanning is used as an example. The detection apparatus may scan a plurality of rows to complete the detection of the field of view range.

In the foregoing implementation, in some angles of the field of view range, the echo light spot is received through dynamically shifting. In other angles, the echo light spot may be received in the fixed reference receiving area or may be received through dynamically shifting. In this way, a manner of receiving the echo light spot can be adjusted more flexibly, the energy of the echo light spot can be received more accurately, and the detection precision can be improved.

For example, the array detector may select, based on a horizontal angle, whether to use a dynamic receiving manner for detection at a specific horizontal angle.

In a possible implementation, some angles are angles close to an edge of the field of view. Because a phenomenon of the shift of the light spot is more prone to occur at the angle close to the edge of the field of view, an echo light spot of a detection signal transmitted to the edge of the field of view is received through dynamically shifting, so that energy of the echo light spot can be received more accurately, the energy loss caused by the shift of the light spot is reduced, and the detection precision of the detection apparatus is improved.

In another possible implementation, the detection apparatus is further configured to: receive an echo of a fourth detection signal by using the reference receiving area, and obtain energy of the echo of the fourth detection signal. A pointing angle of the fourth detection signal is located in an intermediate area of the field of view range.

It is considered that a possibility that a shift occurs on an echo light spot from the intermediate area of the field of view range is low. In this case, energy of the echo light spot can be received more accurately by using the reference receiving area, so that the detection precision is improved.

**In a possible implementation of the first aspect,** a maximum detection distance for the first detection signal and a maximum detection distance for the second detection signal are less than a maximum detection distance for a third detection signal transmitted at a third moment. The third moment and the first moment are different (for example, long-range detection and short-range detection are performed with time distinction) or the same (for example, long-range detection and short-range detection are performed without time distinction). Similarly, the third moment and the first moment are different or the same.

A maximum detection distance is related to energy density and/or power of a signal. For example, energy density and/or power of the first detection signal are/is less than those/that of the third detection signal. For another example, energy density/power of the second detection signal is less than that of the third detection signal.

In a possible implementation, the array detector may determine, based on the long-range detection and the short-range detection, whether to use the dynamic receiving manner. For example, during short-range detection, an echo signal is received in a manner of dynamically switching the receiving area.

Optionally, the echo of the third detection signal may also be received in the manner of dynamically shifting the receiving area.

**In a possible implementation of the first aspect,** the method further includes:

The array detector obtains an output electrical signal based on the first echo signal and the second echo signal.

The array detector obtains statistical histogram data based on the output electrical signal, where the statistical histogram data is used to obtain one or more pixels in a detection result of the field of view range.

Optionally, the first echo signal and the second echo signal correspond to the pixels with the same detection result.

**In a possible implementation of the first aspect,** the method further includes:

The array detector adjusts an echo signal receiving area to the second area at a third moment, where the third moment is earlier than the second moment.

In this implementation, the adjustment of the receiving area on the array detector is earlier than a transmission time of the detection signal. Some detection elements need time to adjust working statuses of the detection elements, for example, some detection elements need to perform operations such as power-on or output channel gating, and these operations need a specific period of time to be stable.

In the foregoing implementation, the receiving area is adjusted to the second area before the second detection signal is transmitted, and when the detection element in the second area obtains the energy of the second echo signal, higher accuracy and stronger stability are achieved, so that detection performance can be improved.

**According to a second aspect,** an embodiment of this application further provides a detection method, and the method includes:
transmitting a first detection signal in a first area of the array transmitter, where the first detection signal corresponds to a first echo signal; and
transmitting a second detection signal in a second area of the array transmitter, where the second detection signal corresponds to a second echo signal.

The first area and the second area are included in the array transmitter, the first area and the second area each include at least two light-emitting elements, and the first area and the second area do not completely overlap.

The first detection signal and the second detection signal are used to detect a same detection area in a field of view. Alternatively, the first echo signal and the second echo signal correspond to pixels in a same detection result. In other words, the first echo signal and the second echo signal are used to obtain statistical histogram data, where the statistical histogram data is used to obtain one or more pixels in a detection result of a field of view range.

Optionally, the foregoing method may be applied to an array transmitter or a controller. The controller may control the array transmitter, and the array transmitter includes a plurality of light-emitting elements.

In this embodiment of this application, for the same detection area (corresponding to a same pixel area in the detection result), different transmitting areas in the array transmitter are used to emit light for detection. Pointing angles of different transmitting areas relative to the detection area are different, and formed echo light spots may fall on different positions of a detector (or a receiver).

In this case, when a shift occurs on an echo light spot corresponding to the detection signal (which deviates from a reference receiving area), the shift of the light spot may be shifted leftward or rightward (or upward or downward) by using different angles. Detection signals at a plurality of pointing angles are used, and in a plurality of echo light spots corresponding to the plurality of detection signals, there is probably a light spot that falls within the reference receiving area, so that the detector can obtain energy of the echo light spot from the reference receiving area. In conclusion, detection signals transmitted in different transmitting areas are used, so that an effect of dynamically shifting the receiving area is achieved, an energy loss caused by the shift of the echo light spot is reduced, and detection precision of the detection apparatus is improved.

**In a possible implementation of the second aspect,** the first detection signal and the second detection signal are signals transmitted within a same period of detection time.

Optionally, one period of detection time may be one slot (slot), one beam position, one probe frame, or one probe subframe.

**In a possible implementation of the second aspect,** the first area and a reference transmitting area completely overlap, an offset between the second area and the reference transmitting area is a first distance, the first distance is a multiple of a unit width, and the unit width is a minimum resolution unit of the array transmitter.

A third echo signal corresponding to a fourth detection signal transmitted in the reference transmitting area in a first environment condition falls within a reference receiving area of an array detector, and the reference receiving area is used to receive the third echo signal and obtain energy of the third echo signal.

**In a possible implementation of the second aspect,** an offset between the first area and a reference transmitting area is a second distance, an offset between the second area and the reference transmitting area is a third distance, the second distance and the third distance are different multiples of a unit width, and the unit width is a minimum resolution unit of the array transmitter.

**In a possible implementation of the second aspect,** a temperature of an environment in which the array transmitter currently works is higher than a first temperature threshold.

When the temperature is higher than or equal to the first temperature threshold, an area, of the array detector, on which the first echo signal and the second echo signal fall deviates from the reference receiving area.

**In a possible implementation of the second aspect,** in a first direction, a pointing angle of the first detection signal and a pointing angle of the detection signal fall within a first angle range.

The first angle range is some angles in the field of view range.

**In a possible implementation of the second aspect,** the first echo signal and the second echo signal are used to obtain statistical histogram data, and the statistical histogram data is used to obtain one or more pixels in the detection result of the field of view range.

**In a possible implementation of the second aspect,** a maximum detection distance for the first detection signal and a maximum detection distance for the second detection signal are less than a maximum detection distance for a third detection signal transmitted at a third moment.

**According to a third aspect,** an embodiment of this application further provides an array detector, where the array detector includes a plurality of detection elements.

The array detector is configured to implement the method described in any one of the first aspect or the possible implementations of the first aspect.

**According to a fourth aspect,** an embodiment of this application further provides an array transmitter, where the array transmitter includes a plurality of light-emitting elements.

The array detector is configured to implement the method described in any one of the second aspect or the possible implementations of the second aspect.

**According to a fifth aspect,** an embodiment of this application further provides a detection apparatus, where the detection apparatus includes a transmitter and an array detector, and the transmitter is configured to transmit a first detection signal at a first moment and transmit a second detection signal at a second moment.

The array detector includes the array detector described in the third aspect.

**According to a sixth aspect,** an embodiment of this application further provides a detection apparatus, where the detection apparatus includes an array transmitter and a detector, and the array transmitter includes the array transmitter described in the fourth aspect.

The detector is configured to: receive a first echo signal and receive a second echo signal.

**According to a seventh aspect,** an embodiment of this application further provides a detection apparatus, where the detection apparatus includes an array detector, a transmitter, and a controller. The controller is configured to control the transmitter and the array detector, so that the detection apparatus implements the detection method described in any one of the first aspect.

**According to an eighth aspect,** an embodiment of this application further provides a detection apparatus, where the detection apparatus includes an array transmitter, a detector, and a controller. The controller is configured to control the array transmitter and the detector, so that the detection apparatus implements the detection method described in any one of the second aspect.

**According to a ninth aspect,** an embodiment of this application further provides a terminal, where the terminal includes the array detector described in the third aspect, the array transmitter described in the fourth aspect, the detection apparatus described in the fifth aspect, the detection apparatus described in the sixth aspect, the detection apparatus described in the seventh aspect, or the detection apparatus described in the eighth aspect.

Optionally, the terminal may be an intelligent terminal such as a vehicle, an uncrewed aerial vehicle, or a robot, or a transportation means.

For some beneficial effects of the second aspect to the ninth aspect of this application, refer to the beneficial effects of the first aspect. Details are not described herein again.

### BRIEF DESCRIPTION OF DRAWINGS

The following briefly describes accompanying drawings used in descriptions of embodiments.
FIG. 1 is a diagram of a transmitting optical path and a receiving optical path;
FIG. 2 is a diagram of a relationship between a shift of a light spot and a distance;
FIG. 3 is a diagram of positions of light spots on an array detector at different temperatures;
FIG. 4 is a diagram of a structure of a detection apparatus according to an embodiment of this application;
FIG. 5 is a diagram of a laser transmitter according to an embodiment of this application;
FIG. 6A is a diagram of another laser transmitter according to an embodiment of this application;
FIG. 6B is a diagram of another laser transmitter according to an embodiment of this application;
FIG. 7 is a schematic flowchart of a detection method according to an embodiment of this application;
FIG. 8 is a diagram of a receiving area in an array detector according to an embodiment of this application;
FIG. 9 is a diagram of a running scenario of a detection apparatus according to an embodiment of this application;
FIG. 10 is a diagram of a running scenario of another detection apparatus according to an embodiment of this application;
FIG. 11 is a diagram of a control signal according to an embodiment of this application;
FIG. 12 is a schematic flowchart of another detection method according to an embodiment of this application;
FIG. 13 is a diagram of a transmitting area in an array transmitter according to an embodiment of this application;
FIG. 14 is a diagram of a running scenario of another detection apparatus according to an embodiment of this application; and
FIG. 15 is a diagram of a running scenario of another detection apparatus according to an embodiment of this application.

### DESCRIPTION OF EMBODIMENTS

The following further describes in detail embodiments of this application with reference to accompanying drawings.

For ease of understanding, some concepts related to embodiments of this application are described for reference by using following examples. Details are described below.

### 1. Detection apparatus

The detection apparatus mentioned in embodiments of this application may be a lidar, or may be another optical detection apparatus, for example, a fusion detection apparatus (for example, a detection apparatus that integrates a radar detector and an image sensor). A working principle of the detection apparatus is to transmit a detection signal and receive an echo to detect a target in a field of view.

The detection apparatus in embodiments of this application can be used in various fields such as intelligent driving, intelligent transportation, intelligent manufacturing, environment detection, mapping, and uncrewed aerial vehicles, and can realize one or more functions of target detection, distance measurement, speed measurement, target tracking, imaging recognition, and the like.

The detection apparatus in embodiments of this application may be used in a vehicle-mounted detection apparatus (for example, a vehicle-mounted radar), a roadside detection apparatus (for example, an intersection radar), or the like, or may be used in another detection apparatus, for example, a detection apparatus mounted on an apparatus such as an uncrewed aerial vehicle, a robot, a track vehicle, a bicycle, a signal light, a speed measurement apparatus, or a base station. A mounting position of the detection apparatus is not limited in this application.

### 2. Field of view (field of view, FOV)

A line-of-sight (line of sight, LOS) area in which transmission of a signal (for example, a radio wave or a laser) is uninterrupted is required between a transmit end of a detection apparatus and a target object and/or between a receive end of the detection apparatus and the target object. The line-of-sight area may be understood as a field of view, or referred to as a field of view.

In the optical field, an included angle formed by a lens of an optical instrument as a vertex and two edges of a maximum range in which an object image of a measured target can pass through the lens is referred to as the field of view. A value of the field of view determines a field of view of the optical instrument. A larger field of view indicates a larger field of view.

In some scenarios, the detection apparatus scans object space through rotation or swinging, to form a large field of view.

The foregoing descriptions of the technical terms are optionally used in the following embodiments.

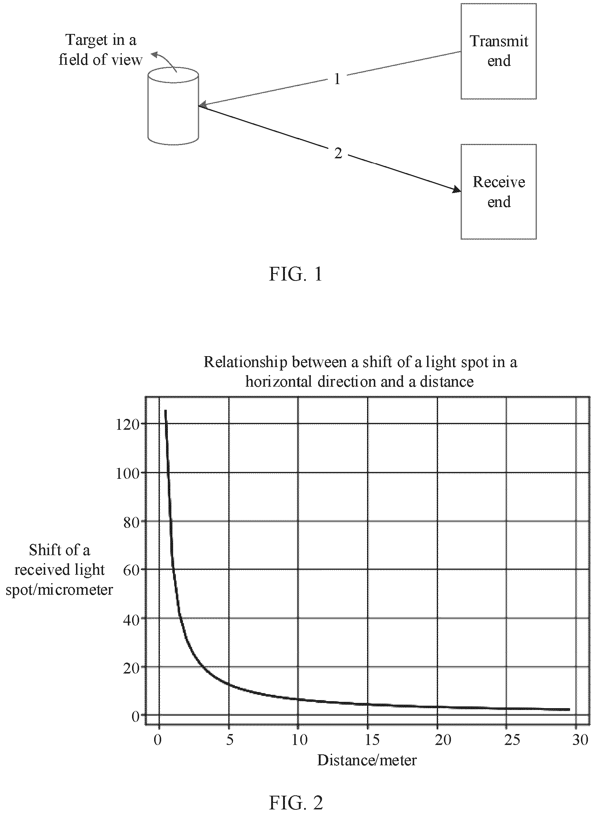

A detection principle of the detection apparatus is to transmit a detection signal and receive an echo signal (or briefly referred to as an echo in some embodiments) corresponding to the detection signal to obtain related information of a target. FIG. 1 is a diagram of a possible transmitting optical path and a possible receiving optical path. A transmit end of a detection apparatus transmits a detection signal 1, and the detection signal 1 is reflected on a target in a field of view, to form an echo signal 2. The echo signal 2 falls within a detector and is received by a detection element in the detector. The detection element receives the echo signal 2, obtains energy of the echo signal 2 (for example, obtains electrical signals with different features, or obtains a quantity of photons), and performs processing to obtain information such as a distance, reflectivity, a speed, a color, a shape, and a pattern of the target.

Because radar detection is performed at a plurality of angles and covers a long distance, a light spot of an echo signal usually does not fixedly fall within a specific area of an array detector.

First, a position falling on the array detector is related to the distance for the target and a pointing angle of the target (or a position of the target in the field of view). In some scenarios, the array detector includes a plurality of detection elements, and the array detector includes a reference receiving area. A detection element in the reference receiving area may obtain and receive energy of the echo signal, and the reference receiving area is also referred to as a region of interest (region of interest, ROI). FIG. 2 is a diagram of a possible relationship between a shift of a light spot and a distance. A shift in a horizontal direction is used as an example. A target closer to the detection apparatus indicates a larger shift between an echo light spot and the reference receiving area of the detection apparatus. The pointing angle of the target relative to the detection apparatus also affects the shift of the light spot. When the target is located at an edge of the field of view, the shift between the corresponding echo light spot and the reference receiving area is large.

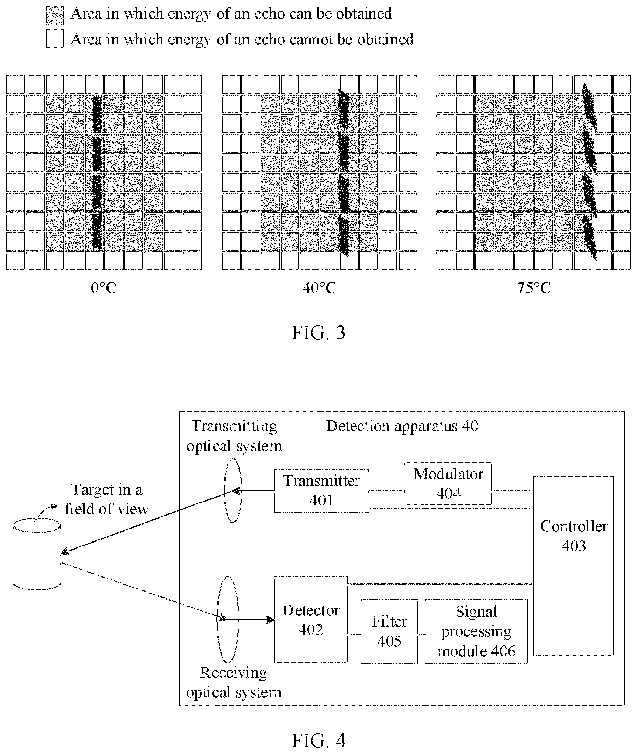

In addition, the shift of the light spot is further related to a factor such as an ambient temperature or aging of an optical device. FIG. 3 is a diagram of possible positions of light spots on an array detector at different temperatures. Gray grids in a detector are an ROI area. Energy of an echo can be obtained in the ROI area. When an ambient temperature is 0°C, echo light spots fall within the ROI area, a shape of the light spots is normal, and the energy is concentrated. When an ambient temperature is 45°C, a shape of echo light spots changes, the energy is dispersed, the light spots shift relative to those at 0°C, and a small part of the light spots exceed the ROI area. When an ambient temperature is 75°C, echo light spots further change, the energy is severely dispersed, and a shift degree further changes. It should be understood that FIG. 3 is a possible example for ease of understanding the positions of the light spots on the array detector at different temperatures. In a specific implementation process, there may be another case of a size, energy distribution, a position, or a shift degree of the light spot.

A phenomenon such as position shift, shape splitting, or energy dispersion of the light spot is referred to as a shift of the light spot. The shift of the light spot is likely to cause the light spot to shift out of an area in which the energy of the echo signal can be received, causing exception of subsequent distance compensation and reflectivity compensation and affecting detection precision of a lidar.

As shown in FIG. 3, energy distribution of the echo light spots changes greatly, and energy of some of the light spots fall within an area in which the energy of the echo cannot be received. As a result, the energy of the echo cannot be received, causing missed detection of the signal and affecting accuracy of a detection result. In addition, different receiving positions of the detection apparatus correspond to different processing such as distance compensation and reflectivity compensation. The shift of the light spot may further cause processing errors such as a distance compensation exception and a reflectivity compensation exception. This further affects detection precision.

In view of this, embodiments of this application provide a detection method, an array detector, an array transmitter, a detection apparatus, and a terminal, so that an energy distribution change of an echo light spot can be adapted, an energy loss caused by a shift of the light spot can be reduced, and detection precision of the detection apparatus can be improved.

The following describes a system architecture and a service scenario of embodiments of this application. It should be noted that the system architecture and the service scenario described in this application are intended to describe the technical solutions of this application more clearly, and do not constitute a limitation on the technical solutions provided in this application. It should be understood that, with evolution of the system architecture and emergence of a new service scenario, the technical solutions provided in this application are also applicable to similar technical problems.

FIG. 4 is a diagram of a structure of a possible detection apparatus according to an embodiment of this application. The detection apparatus 40 includes a transmitter 401 and a detector 402. Optionally, the detection apparatus 40 further includes one or more of a controller 403, a modulator 404, a filter 405, a signal processing module 406, and the like. A plurality of modules of the detection apparatus may be connected in a wired and/or wireless manner. The following describes each module by using examples.
(1) The transmitter 401 is configured to generate a laser signal. For example, the transmitter 401 may include a light-emitting element such as a laser diode (laser diode, LD), a vertical cavity surface emitting laser (vertical cavity surface emitting laser, VCSEL), a photonic crystal surface emitting laser (photonic crystal surface emitting semiconductor laser, PCSEL), an edge emitting laser (edge emitting laser, EEL), a distributed feedback laser diode (distributed feedback LD, DFB-LD), a grating-coupled sampling reflection laser diode (Grating coupled sampling reflection LD, GCSR-LD), or a micro-opto-electro-mechanical system laser diode (micro-opto-electro-mechanical system LD, MOEMS-LD).

Optionally, when the transmitter 401 includes a plurality of light-emitting elements, the plurality of light-emitting elements may be arranged in an array. In this case, the transmitter may be referred to as an array transmitter or a flash transmitter. A rule of the array is not limited in this application. In a specific implementation process, the array transmitter may be, for example, a 1×10 array, a 2×5 array, or an 8×9 array.

An optical signal transmitted by the transmitter 401 may be irradiated onto a detection area (the detection area is a real area in a field of view) through one or more optical elements. The following enumerates three possible example designs of a transmission process.

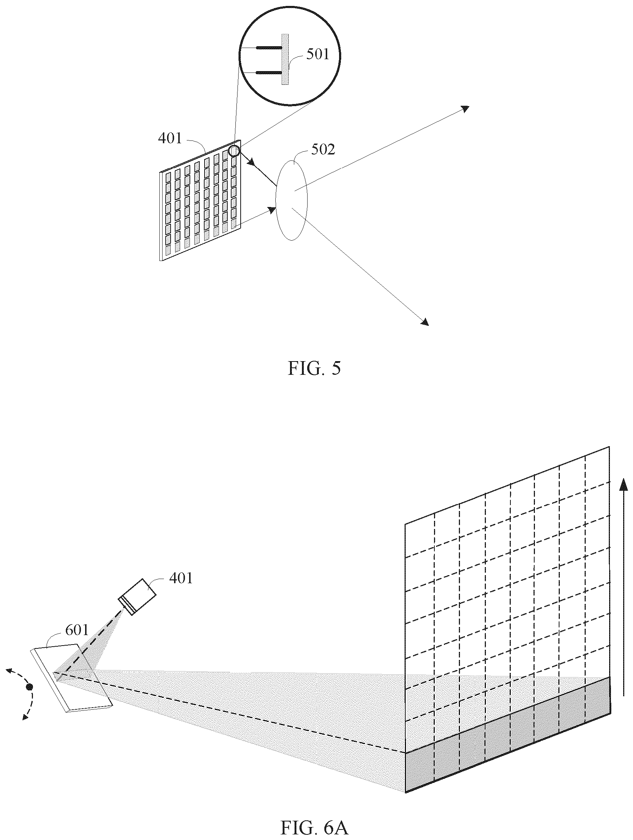

Design 1: The transmitter 401 may be an array transmitter. FIG. 5 is a diagram of a possible laser transmitter according to an embodiment of this application. The transmitter 401 includes an 8×8 array light source formed by 64 light-emitting elements. As shown in FIG. 5, each small grid in the transmitter 401 is one light-emitting element 501. During transmission, one or more light-emitting elements in the transmitter 401 send detection signals, and the detection signals are irradiated onto a field of view through an optical element 502.

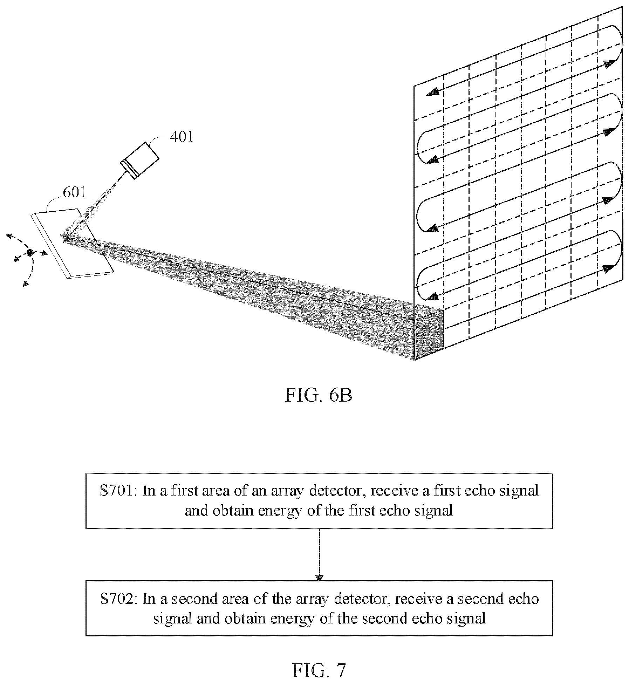

Design 2: An optical signal transmitted by the laser transmitter 401 may be irradiated onto a detection area through a scanner, to implement scanning and detection on the detection area. Refer to FIG. 6A and FIG. 6B. FIG. 6A is a diagram of another possible laser transmitter according to an embodiment of this application. FIG. 6B is a diagram of another possible laser transmitter according to an embodiment of this application. A detection signal transmitted by the transmitter 401 may be irradiated onto the detection area in the field of view at one or more angles through a scanner 601.

The scanner 601 may include one or more of a rotation mirror, a micro-oscillating mirror, an oscillating mirror, or the like. A scanning form of the scanner 601 may include point scanning, line scanning, or the like. A scanning sequence of the scanner is not limited in this application, for example, may be from top to bottom, from left to right, or from right to left. In addition, in some scenarios, a scanning effect may also be achieved through rotation of the detection apparatus itself.

For example, FIG. 6A is a diagram of line scanning. The scanner may adjust an angle in one direction to scan and detect the field of view. FIG. 6B is a diagram of point scanning. The scanner may adjust angles in two directions to scan and detect the field of view.

Design 3: The transmitter 401 may include one or more light sources (or referred to as a flood light source), and a detection signal transmitted by the light source can light up the entire field of view at a time.

(2) The detector 402 is configured to receive an optical signal. Further, the detector 402 may obtain an electrical signal based on the optical signal.

Optionally, the detector 402 may include one or more detection elements. For example, the detector 402 may include one or more of the following detection elements: a single-photon avalanche diode (single-photon avalanche diode, SPAD), a silicon photomultiplier (Silicon photomultiplier, SiPM), a semiconductor avalanche photodiode (avalanche photo detector, APD), a multi-pixel photon counter (multi-pixel photon counter, MPPC), an electron multiplying charge-coupled device (electron multiplying charge-coupled device, EMCCD), or the like.

Further, when the detector includes a plurality of detection elements, the plurality of detection elements may be arranged in an array. For example, the array may be a 1×10 array or a 20×40 array. A quantity of rows and a quantity of columns arranged in the array are not limited in this application. In a possible implementation, the detector 402 may be specifically a SPAD array, a SiPM array, or the like.

(3) The controller is configured to generate a control signal, to control another module to complete a function of the module.

For example, the controller may perform gating on some detection elements in an array detector by using the control signal, and the gated detection elements may obtain an electrical signal based on an optical signal.

For another example, the controller may control, by using the control signal, some light-emitting elements in the array transmitter to emit light at a specific moment.

Optionally, the filter, the signal processing module, and the like are all configured to process a received echo signal. For example, the filter includes but is not limited to a finite impulse response (finite impulse response, FIR) filter, an infinite impulse response (infinite impulse response, IIR) filter, a low-pass filter, a band-pass filter, or the like. For example, processing performed by the signal processing module on the signal includes but is not limited to one or more of analog-to-digital conversion, time-to-digital conversion, signal detection, TOF extraction, distance compensation, reflectivity compensation, and the like.

In addition, the detection apparatus further includes one or more optical elements, such as a receiving optical system and a transmitting optical system shown in FIG. 4. The optical element includes but is not limited to a collimating lens, a lens, a light filter, a beam splitter, a diffuser, a reflector, a rotation mirror, an oscillating mirror, a micro-oscillating mirror, or the like. A quantity, a placement position, or the like of the optical element is not limited in this application.

The following describes a detection method provided in this application.

FIG. 7 is a schematic flowchart of a detection method according to an embodiment of this application. Optionally, the detection method may be applied to the detection apparatus shown in FIG. 4. The method shown in FIG. 7 includes at least the following steps:
Step S701: In a first area of the array detector, receive a first echo signal and obtain energy of the first echo signal.

The first area is included in the array detector, and the first area includes at least two detection elements. For example, the array detector is a 100×100 SPAD array, and the first area includes some SPADs.

The first echo signal corresponds to the first detection signal, and the first detection signal is sent at a first moment. In other words, an echo corresponding to the first detection signal transmitted at the first moment is received in the first area of the array detector.

Optionally, when the first echo signal is received, detection elements outside the first area of the array detector may be arranged to not receive a signal. In other words, these detection elements may not be in a working state. For example, the detection element outside the first area may not be powered on. In this case, energy consumption of the detector may be reduced, and a data amount output by the detection apparatus may be reduced.

Alternatively, optionally, when the first echo signal is received, detection elements outside the first area of the array detector may receive a signal, but an electrical signal obtained by using the signal received by the detection element is not used during processing. For example, in some scenarios, energy of a plurality of echo signals is accumulated. In this case, the electrical signal output by the detection element outside the first area does not participate in energy accumulation.

Step S702: In a second area of the array detector, receive a second echo signal and obtain energy of the second echo signal.

The second area is included in the array detector, and the second area includes at least two detection elements. For example, the detection element is a 100×100 SPAD array, and the second area includes some SPADs.

The second echo signal corresponds to the second detection signal, and the second detection signal is sent at a second moment. In other words, an echo corresponding to the second detection signal transmitted at the second moment is received in the second area of the array detector. The first moment and the second moment may be different moments.

Optionally, when the first echo signal is received, the detection elements outside the first area of the array detector may be arranged to not receive a signal. Alternatively, optionally, when the first echo signal is received, the detection element outside the first area of the array detector may receive the signal, but the electrical signal obtained by using the signal received by the detection element is not used or does not participate in obtaining related information of a target during processing.

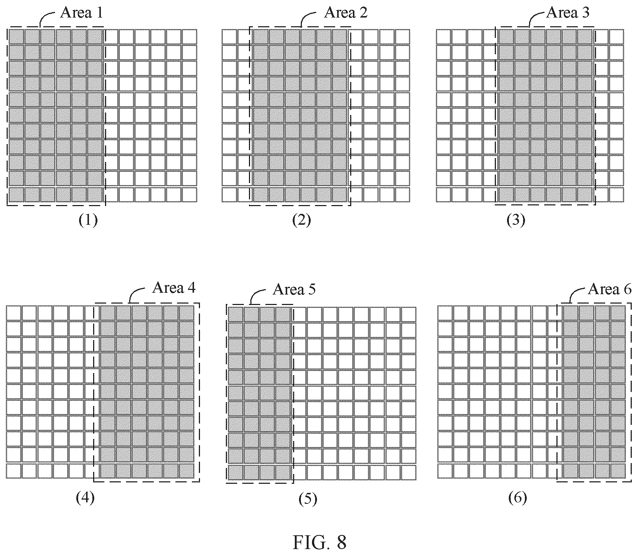

In this embodiment of this application, the first area and the second area do not completely overlap. Not completely overlapping may be completely not overlapping (for example, no same detection element is included) or partially overlapping and partially not overlapping (to be specific, a same detection element may be included, but there are different detection elements). FIG. 8 is a diagram of a receiving area in an array detector according to an embodiment of this application. Each small square indicates one detection element or one detection element group, and one detection element group may include a plurality of detection elements. For example, the first area is an area 1, and includes detection elements (or detection element groups) in columns 1 to 6. The second area is an area 2, and includes detection elements (or detection element groups) in columns 3 to 8. It is not difficult to learn that there are non-overlapping detection elements (or detection element groups) in the area 1 and the area 2. In other words, at least one detection element (or detection element group) does not belong to both the area 1 and the area 2.

Further, in the embodiment shown in FIG. 7, the first detection signal and the second detection signal are used as an example to describe a dynamic shift of the receiving area. In a specific implementation process, the array detector may use at least two areas for receiving in a plurality of times of detection.

For example, a transmitter of the detection apparatus transmits N (N is an integer and N > 1) detection signals within a period of time, and the receiving area shown in FIG. 8 separately receives a plurality of detection signals, where N = 12. For 1^{st} and 7^{th} detection signals, the array detector uses an area 1 to receive echo signals. For 2^{nd} and 8^{th} detection signals, the array detector uses an area 2 to receive echo signals. For 3^{rd} and 9^{th} detection signals, the array detector uses an area 3 to receive echo signals. For 4^{th} and 10^{th} detection signals, the array detector uses an area 4 to receive echo signals. For 5^{th} and 11^{th} detection signals, the array detector uses an area 5 to receive echo signals. For 6^{th} and 12^{th} detection signals, the array detector uses an area 6 to receive echo signals. For the twelve detection signals, an area in which signals are received covers a large range of the array detector, so that a distribution change of a light spot can be adapted, and a possibility of capturing the light spot of the echo signal can be improved.

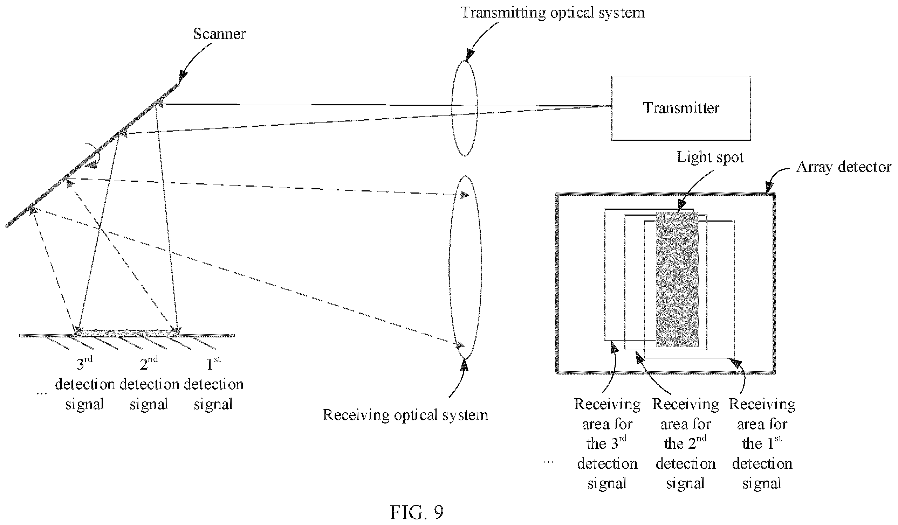

FIG. 9 is a diagram of a running scenario of a possible detection apparatus according to an embodiment of this application. A transmitter of the detection apparatus transmits a plurality of detection signals (solid lines with arrows shown in FIG. 9), the plurality of detection signals are irradiated onto a field of view (optionally, through a transmitting optical system, a scanner, or the like), to form a plurality of transmitting light spots. A target in the field of view may separately reflect the plurality of detection signals, to form a plurality of echoes (dashed lines with arrows shown in FIG. 9), and the plurality of echoes are received in different receiving areas of the array detector. In a process of receiving the echoes of the plurality of detection signals, the array detector dynamically adjusts the echo signal receiving area, so that the possibility of capturing the light spot of the echo signal is improved. By dynamically adjusting the receiving area instead of performing gating on all detection elements of the entire array detector at the same time, energy consumption of the detection apparatus is greatly reduced, an effective proportion of a received signal is increased, a data amount simultaneously processed by the detection apparatus is reduced, a computing burden is reduced, and a requirement of a computing capability of a chip is reduced.

It should be noted that, for ease of describing light spots of different detection signals, a spacing between different detection signals is obvious. In a specific implementation process, a time interval between different detection signals may be set to be extremely small, for example, at a microsecond level or a nanosecond level. Therefore, a spacing between the light spots of different detection signals is small.

In a possible implementation, a difference between pointing angles of a light spot formed by the first detection signal and a light spot formed by the second detection signal is less than a minimum angle that can be identified by the detection apparatus.

**In a possible implementation,** the transmitter of the detection apparatus is an array transmitter. A plurality of light-emitting elements in the array transmitter form a plurality of transmitting areas, each transmitting area transmits a plurality of detection signals, and each transmitting area forms one transmitting angle. In some scenarios, the plurality of transmitting areas are directly represented as a plurality of transmitting angles. For a plurality of detection signals transmitted in a specific transmitting area (at a specific transmitting angle), the array detector may dynamically adjust the receiving area, to use different receiving areas to receive a plurality of detection signals transmitted at a same transmitting angle.

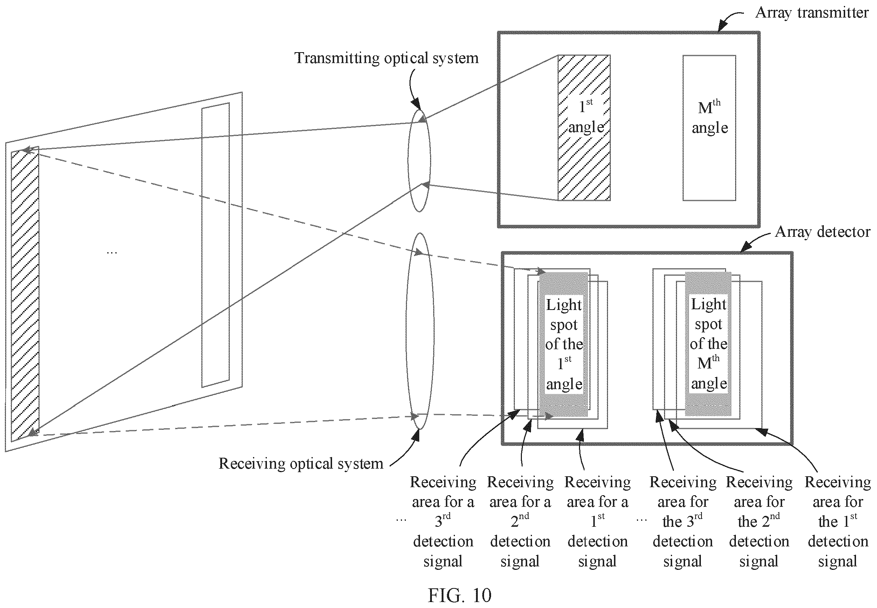

FIG. 10 is a diagram of a running scenario of another detection apparatus according to an embodiment of this application. A transmitter of the detection apparatus is an array transmitter, and may transmit detection signals of a plurality of (for example, M, where M is an integer and M > 1) angles. At a 1^{st} angle, the array detector transmits a plurality of detection signals, and at a receive end, for the plurality of detection signals at an angle, an area in which an echo light spot is received is dynamically adjusted, to improve a possibility of capturing the light spot of the echo signal.

**In a possible implementation,** the first area and the second area shift near a reference receiving area. The reference receiving area is an area in which the echo signal of the first detection signal and the echo signal of the second detection signal are received in a first environment condition, and may be considered as a desirable receiving area, for example, the foregoing ROI. The reference receiving area is included in the array detector, and the first environment condition is a predefined working environment of the array detector. For example, the first environment condition is an environment condition, for example, 0°C or a normal temperature and a normal voltage. For another example, the first environment condition is a test environment condition of the array detector. Optionally, the reference receiving area may be preconfigured or predefined, for example, written by a manufacturer, development personnel, or test personnel.

Optionally, when the transmitter is an array transmitter and transmits detection signals at M angles during transmission, M reference receiving areas may be included, and each angle of the array transmitter corresponds to one reference receiving area of the array detector.

**In a possible implementation,** the first area and the second area shift in a first direction by using the reference receiving area as an anchor point. The first direction includes but is not limited to a left-right direction, an up-down direction, a diagonal direction, or the like.

**In a possible implementation,** when the first area or the second area shifts relative to the reference receiving area, an offset is a multiple of a unit width. The unit width is a minimum resolution unit of the array detector, for example, one detection element.

Optionally, the offset is less than a difference between a minimum length of imaging of the echo light spot on the array detector and the unit width. That is, an offset n satisfies the following formula: L - a ≥ n ≥ a, where L (L is a real number and L > 0) is a minimum length (or a width) of imaging of the echo light spot on the array detector, and a is a length (or a width) of the minimum resolution unit of the array detector.

**In an example of a shift case,** the first area and the reference receiving area completely overlap, an offset between the second area and the reference receiving area is a first distance, the first distance is a multiple of the unit width, and the unit width is the minimum resolution unit of the array detector. Further, the first distance is less than the difference between the minimum length of imaging of the echo light spot on the array detector and the unit width. In other words, the first area is the reference receiving area, and the second area shifts relative to the reference receiving area. It is considered that a shift may not occur on the echo light spot, and even if the shift occurs, a shifted echo light spot may still fall near the reference receiving area. Therefore, in the foregoing implementation, echo energy receiving efficiency can be improved, an effective proportion of a signal can be increased, and detection precision can be improved.

**In another example of a shift case,** an offset between the first area and a preset reference receiving area is a second distance, an offset between the second area and the reference receiving area is a third distance, the second distance and the third distance are different multiples of the unit width, and the unit width is the minimum resolution unit of the array detector. Further, the second distance is less than the difference between the minimum length of imaging of the echo light spot on the array detector and the unit width, and the third distance is less than the difference between the minimum length of imaging of the echo light spot on the array detector and the unit width. In other words, both the first area and the second area shift relative to the reference receiving area, but the offsets of the first area and the second area are different. It is considered that a shifted echo light spot may still fall near the reference receiving area. In the foregoing implementation, a distribution change of light spot energy can be adapted, echo energy receiving efficiency can be improved, an effective proportion of a signal can be increased, and detection precision can be improved.

**In a possible implementation,** a temperature of an environment in which the array detector currently works is higher than a first temperature threshold. When the temperature is higher than or equal to the first temperature threshold, areas, of the array detector, on which the first echo signal and the second echo signal fall deviate from the reference receiving area. In the foregoing implementation, when the temperature is higher than or equal to the first temperature threshold, the echo light spot may deviate from the reference receiving area. Therefore, when the temperature is higher than or equal to the first threshold, the energy of the echo light spot can be received more accurately by dynamically shifting the receiving area, to reduce an energy loss caused by the shift of the light spot, and improve the detection precision of the detection apparatus.

**In a possible implementation,** when the light spot energy of the echo signal is not uniformly distributed, consistency between a plurality of channels that obtain the energy is poor. By dynamically shifting the receiving area, the energy of the echo light spot can be equivalently uniform, and the channel consistency can be improved. A channel usually corresponds to one or more adjacent detection elements. For example, 3×3 detection elements are used as one pixel, and one pixel is one channel. Therefore, the 3×3 detection elements are considered as one channel.

For example, when a transmit light spot formed by a transmit signal is a linear light spot or an array light spot, because there is a gap between the linear light spot or the array light spot, energy obtained by a detection element in the gap is low, and correspondingly, energy of a channel corresponding to the detection element is low. In this case, the receiving area is dynamically shifted (for example, one row or several rows of detection elements are shifted), so that detection elements in the gap correspond to different channels, and therefore, energy of echo light spots received by different channels is equivalently uniform, and the channel consistency is improved. **In a possible implementation,** in the first direction, a pointing angle of the first detection signal and a pointing angle of the second detection signal fall within a first angle range, and the first angle range is some angles in a field of view range.

The field of view range is a field of view of the detection apparatus. The detection apparatus may usually transmit a plurality of detection signals of different angles to complete detection of the field of view range. A detection apparatus in a form of row scanning is used as an example. The detection apparatus may scan a plurality of rows to complete the detection of the field of view range. In the foregoing implementation, in some angles of the field of view range, the echo light spot is received through dynamically shifting. In other angles, the echo light spot may be received in the fixed reference receiving area or may be received through dynamically shifting. In this way, a manner of receiving the echo light spot can be adjusted more flexibly, the energy of the echo light spot can be received more accurately, and the detection precision can be improved.

Optionally, the array detector may select, based on a horizontal angle, whether to use a dynamic receiving manner for detection at a specific horizontal angle.

In a possible implementation, some angles are angles close to an edge of the field of view. Because a phenomenon of the shift of the light spot is more prone to occur at the angle close to the edge of the field of view, an echo light spot of a detection signal transmitted to the edge of the field of view is received through dynamically shifting, so that energy of the echo light spot can be received more accurately, the energy loss caused by the shift of the light spot is reduced, and the detection precision of the detection apparatus is improved.

In another possible implementation, the detection apparatus is further configured to: receive an echo of a fourth detection signal by using the reference receiving area, and obtain energy of the echo of the fourth detection signal. A pointing angle of the fourth detection signal is located in an intermediate area of the field of view range.

It is considered that a possibility that a shift occurs on an echo light spot from the intermediate area of the field of view range is low. In this case, energy of the echo light spot can be received more accurately by using the reference receiving area, so that the detection precision is improved.

**In a possible implementation,** a maximum detection distance for the first detection signal and a maximum detection distance for the second detection signal are less than a maximum detection distance for a third detection signal transmitted at a third moment. The third moment and the first moment are different (for example, long-range detection and short-range detection are performed with time distinction) or the same (for example, long-range detection and short-range detection are performed without time distinction). Similarly, the third moment and the first moment are different or the same.

A maximum detection distance is related to energy density and/or power of a signal. For example, energy density and/or power of the first detection signal are/is less than those/that of the third detection signal. For another example, energy density/power of the second detection signal is less than that of the third detection signal.

In this case, the array detector may determine, based on whether the signal is applicable to the long-range detection or the short-range detection, whether to use the dynamic receiving manner. For example, during short-range detection, an echo signal is received in a manner of dynamically switching the receiving area. In some scenarios, the maximum detection distances for the first detection signal and the second detection signal are small, which are applicable to the short-range detection. There is a large difference between echo light spots in the short-range detection and long-range detection, light spots corresponding to a long-range target are concentrated, and light spots corresponding to a short-range target are dispersed. In this case, an echo of the short-range target is received through dynamically shifting, to reduce a difference between the light spots of the long-range target and the short-range target, and improve short-range detection precision.

Optionally, the echo of the third detection signal may also be received in the manner of dynamically shifting the receiving area.

**In a possible implementation,** the array detector obtains an output electrical signal based on the first echo signal and the second echo signal; and the array detector obtains statistical histogram data based on the output electrical signal, where the statistical histogram data is used to obtain one or more pixels in a detection result of the field of view range. That is, the first echo signal and the second echo signal correspond to pixels with the same detection result.

**In a possible implementation,** the receiving area is switched before a corresponding detection signal is transmitted. For example, the array detector adjusts an echo signal receiving area to the second area at the third moment, where the third moment is earlier than the second moment. In other words, the adjustment of the receiving area on the array detector is earlier than a transmission time of the detection signal. Some detection elements need time to adjust working statuses of the detection elements, for example, some detection elements need to perform operations such as power-on or output channel gating, and these operations need a specific period of time to be stable. Therefore, the receiving area is adjusted to the second area before the second detection signal is transmitted, and when the detection element in the second area obtains the energy of the second echo signal, higher accuracy and stronger stability are achieved, so that detection performance can be improved.

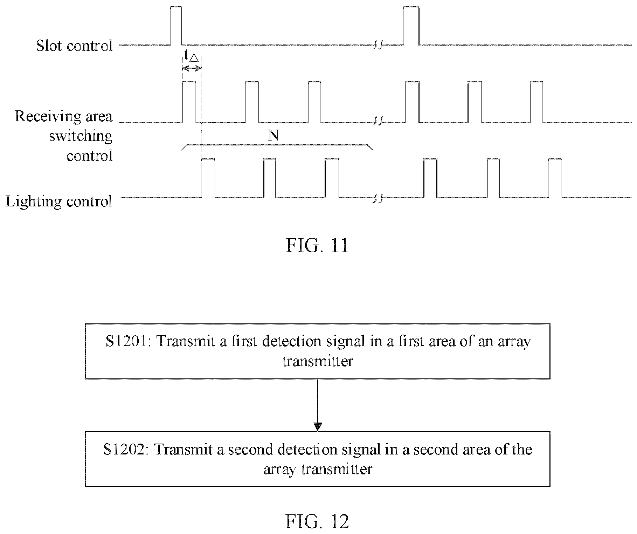

FIG. 11 is a diagram of a control signal according to an embodiment of this application. A receiving area switching control signal is used to switch the receiving area, a lighting control signal indicates to transmit a detection signal, and a time difference between a time at which the receiving area switching control signal is generated and a time at which the corresponding lighting control signal is generated is t_{△}. That is, before the detection signal is transmitted, the array detector is indicated to complete adjustment of the receiving area. For example, before the first detection signal is transmitted, the array detector is indicated to adjust, to the first area, an area in which the echo of the first detection signal is received; and before the second detection signal is transmitted, the array detector is indicated to adjust, to the second area, an area in which the echo of the second detection signal is received.

In control signals shown in FIG. 11, the array detector adjusts the receiving area once for receiving each detection signal. This is an example of a receiving area adjustment frequency. In a specific implementation process, there may further be another design for the frequency of the array detector to adjust the receiving area. This is not strictly limited in this application. For example, the receiving area on the array detector is adjusted every two detection signals, or the receiving area on the array detector is adjusted before a 1^{st} detection signal, a 2^{nd} detection signal, a 4^{th} detection signal, a 5^{th} detection signal, a 7^{th} detection signal, and the like.

**In a possible implementation,** the first detection signal and the second detection signal may be signals transmitted within a same period of detection time. Optionally, one period of detection time may be one slot (slot, or referred to as a time slice), one beam position, one probe frame, or one probe subframe.

The slot is a minimum time unit in a detection process, and a plurality of detection signals may be transmitted in one slot. As shown in FIG. 11, N (N is an integer, and N > 1) detection signals are transmitted in one slot (slot), and at least two receiving areas are used to receive the N detection signals.

The beam position is related to time for the detection signal to complete detection and scanning once in one direction. For example, a field of view of the detection apparatus in a vertical direction is 0° to 20°, and a beam width of the detection signal transmitted by the detection apparatus is 5°. In this case, at least four beam positions are required to cover an entire pitch domain.

The probe frame is an image obtained through completing scanning of a full field of view once by the detection apparatus. One probe frame usually generates one point cloud image.

The probe subframe is obtained by dividing the probe frame. In some scenarios, for a two-dimensional scanning detection apparatus, completing scanning in one direction is a probe subframe, and completing scanning in two directions is a probe frame. For example, in the detection apparatus that performs detection in the form of row scanning, a period of time spent on completing scanning one row is referred to as a probe subframe (or a beam position), and completing detection of the full field of view is referred to as a probe frame. For another example, in a detection apparatus that performs detection in a form of point scanning, a period of time spent on completing detection of one "point" is referred to as a probe subframe (or a beam position), and completing detection of the full field of view is referred to as a probe frame.

In the embodiment shown in FIG. 7, the first area and the second area do not completely overlap. In other words, there is an offset between the first area and the second area. When receiving the echoes of the detection signal transmitted at the first moment and the detection signal transmitted at the second moment, the array detector may adjust a position of the receiving area through dynamically shifting. When a shift may occur on the light spot, the receiving area can adapt to a change in distribution of the light spot through the dynamic adjustment of the receiving area, so that an echo light spot whose position is shifted and/or whose energy is dispersed is captured, an energy loss caused by the shift of the light spot of the echo signal is reduced, and the detection precision of the detection apparatus is improved.

FIG. 12 is a schematic flowchart of another detection method according to an embodiment of this application. Optionally, the detection method may be applied to the detection apparatus shown in FIG. 4. The method shown in FIG. 12 includes at least the following steps:
Step S1201: Transmit a first detection signal in a first area of the array transmitter.

The first area is included in the array transmitter, and the first area includes at least two light-emitting elements. For example, the array transmitter is 8×8 light-emitting elements, and the first area includes some of the transmission and light-emitting elements. For example, the first area includes a column of light-emitting elements or a row of light-emitting elements in the array transmitter.

The first detection signal corresponds to a first echo signal. To be specific, an echo formed after the first detection signal is transmitted to a field of view and is reflected by a target in the field of view is the first echo signal.

Step S 1202: Transmit a second detection signal in a second area of the array transmitter.

The second area is included in the array transmitter, and the first area includes at least two light-emitting elements. For example, the array transmitter is 8×8 light-emitting elements, and the second area includes some of the transmission and light-emitting elements. For example, the second area includes a column of light-emitting elements or a row of light-emitting elements in the array transmitter.

The second detection signal corresponds to a second echo signal. To be specific, an echo formed after the second detection signal is transmitted to the field of view and is reflected by the target in the field of view is the second echo signal. The first detection signal and the second detection signal are used to detect a same detection area in the field of view. Alternatively, the first echo signal and the second echo signal correspond to pixels in a same detection result.

**In a possible implementation,** the detection apparatus further includes an array detector. The array detector obtains an output electrical signal based on the first echo signal and the second echo signal; and the array detector obtains statistical histogram data based on the output electrical signal, where the statistical histogram data is used to obtain one or more pixels in a detection result of the field of view range. That is, the first echo signal and the second echo signal correspond to the pixels with the same detection result.

In step S1201 and step S1202, the first area in which the first detection signal is transmitted and the second area in which the second detection signal is transmitted do not completely overlap. Not completely overlapping may be completely not overlapping (for example, no same light-emitting element is included) or partially overlapping and partially not overlapping (to be specific, a same light-emitting element may be included, but there are different light-emitting elements).

In the embodiment shown in FIG. 12, different transmitting areas in the array transmitter are used to transmit detection signals to detect the detection area. Pointing angles of different transmitting areas relative to the detection area are different, and formed echo light spots may fall on different positions of the detector (or a receiver).

In this case, when a shift occurs on an echo light spot corresponding to the detection signal (which deviates from a reference receiving area), the shift of the light spot may be shifted leftward or rightward (or upward or downward) by using different angles. Detection signals at a plurality of pointing angles are used, and in a plurality of echo light spots corresponding to the plurality of detection signals, there is probably a light spot that falls within the reference receiving area, so that the detector can obtain energy of the echo light spot from the reference receiving area. In conclusion, detection signals transmitted in different transmitting areas are used, so that an effect of dynamically shifting the receiving area is achieved, an energy loss caused by the shift of the echo light spot is reduced, and detection precision of the detection apparatus is improved.

Further, in the embodiment shown in FIG. 12, the first detection signal and the second detection signal are used as an example to describe the dynamic shift of the transmitting area. In a specific implementation process, the array transmitter may use at least two transmitting areas to transmit the detection signal in a plurality of times of detection.

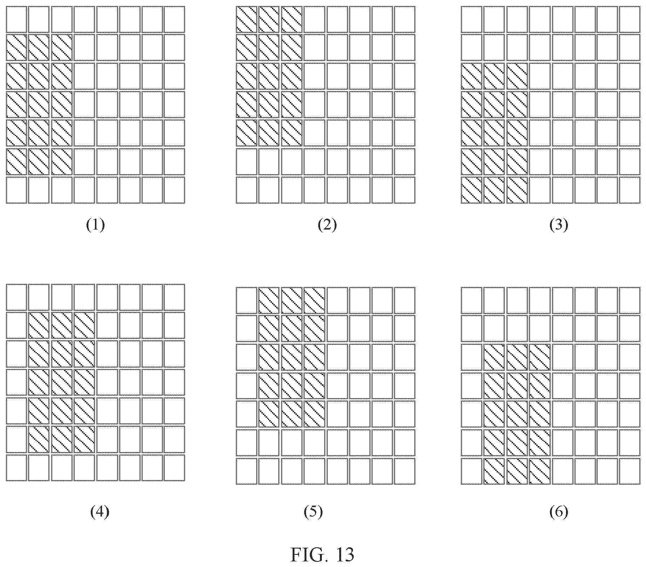

FIG. 13 is a diagram of a transmitting area in an array transmitter according to an embodiment of this application. Each small square indicates one light-emitting element or one light-emitting element group, and one light-emitting element group may include a plurality of light-emitting elements. For example, the first area is an area 1, and includes light-emitting elements (or light-emitting element groups) in rows 1 to 6 of column 1. The second area is an area 2, and includes light-emitting elements (or light-emitting element groups) in rows 2 to 7 of column 1. It is not difficult to learn that there are non-overlapping light-emitting elements (or detection element groups) in the area 1 and the area 2. In other words, at least one light-emitting element (or light-emitting element group) does not belong to both the area 1 and the area 2.

In a possible example, in a period of time, the array transmitter transmits 12 detection signals, and respectively transmits a plurality of detection signals by using the transmitting areas shown in FIG. 12. The array transmitter uses the area 1 to transmit 1^{st} and 7^{th} detection signals, the array transmitter uses the area 2 to transmit 2^{nd} and 8^{th} detection signals, the array transmitter uses an area 3 to transmit 3^{rd} and 9^{th} detection signals, the array transmitter uses an area 4 to transmit 4^{th} and 10^{th} detection signals, the array transmitter uses an area 5 to transmit 5^{th} and 11^{th} detection signals, and the array transmitter uses an area 6 to transmit 6^{th} and 12^{th} detection signals. In the 12 detection signals, the array transmitter dynamically adjusts the transmitting area. When the shift occurs on the light spot, the transmitting area is fine-tuned to increase a possibility that the light spot of the echo signal falls within an effective receiving area.

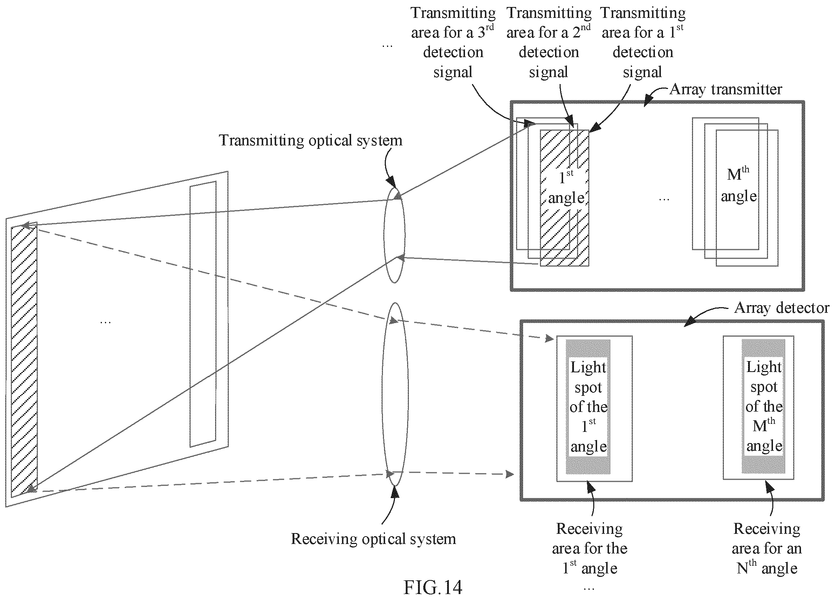

FIG. 14 is a diagram of a running scenario of another possible detection apparatus according to an embodiment of this application. A transmit end of the detection apparatus is an array transmitter, the array transmitter may form a plurality of transmitting angle, and the array transmitter dynamically adjusts a transmitting area for a plurality of detection signals transmitted at each transmitting angle. The plurality of detection signals are irradiated onto a field of view (optionally, through a transmitting optical system, a scanner, or the like), to form a plurality of transmitting light spots. A target in the field of view may separately reflect the plurality of detection signals, to form a plurality of echoes, and the plurality of echoes are received in different receiving areas of the array detector.

In a possible implementation, when the transmitting area is dynamically adjusted, the receiving area may also be dynamically adjusted. Optionally, a manner of adjusting the transmitting area and a manner of adjusting the receiving area may be synchronous or asynchronous.

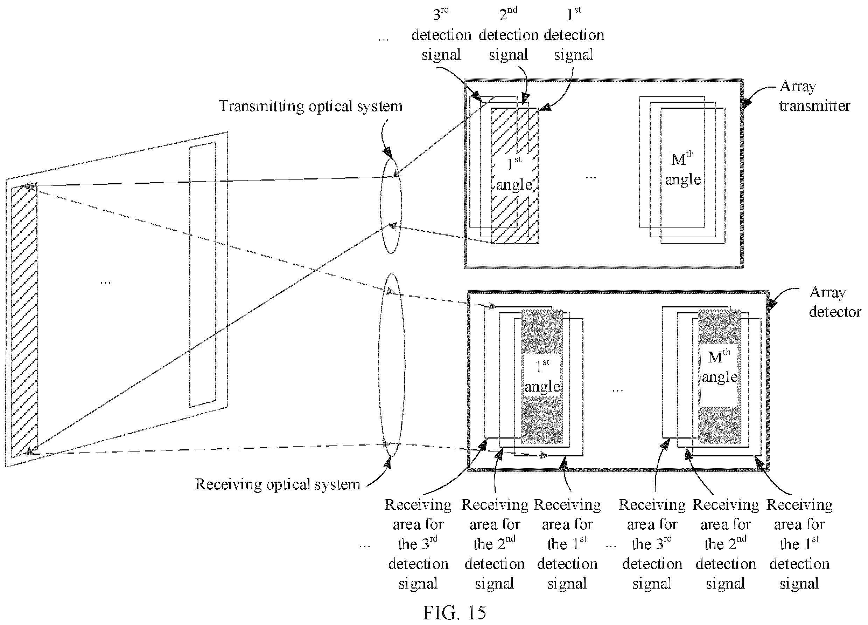

FIG. 15 is a diagram of a possible running scenario according to an embodiment of this application. For each transmitting angle, the array transmitter in the detection apparatus dynamically adjusts the transmitting area to transmit the plurality of detection signals. For the plurality of echoes corresponding to each transmitting angle, the array detector dynamically adjusts the receiving area to receive the echo light spot of the plurality of detection signals.

It should be noted that, for ease of describing light spots of different detection signals, a spacing between different detection signals is obvious. In a specific implementation process, a time interval between different detection signals may be set to be extremely small, for example, at a microsecond level or a nanosecond level. In this case, a spacing between the light spots of different detection signals is correspondingly small.

In a possible implementation, a difference between pointing angles of a light spot formed by a current detection signal and a light spot formed by a next detection signal is less than a minimum angle that can be identified by the detection apparatus.

**In a possible implementation,** the first area and the second area shift near a reference transmitting area. An echo signal (for example, referred to as a third echo signal) corresponding to a detection signal (for example, referred to as a fourth detection signal) transmitted in the reference transmitting area in a first environment condition falls into the reference receiving area of the array detector. The reference transmitting area is included in the array transmitter, and the first environment condition is a predefined working environment of the array transmitter. For example, the first environment condition is an environment condition, for example, 0°C or a normal temperature and a normal voltage. For another example, the first environment condition is a test environment condition of the array transmitter.

Optionally, when the array transmitter transmits detection signals at M angles, M reference transmitting areas may be included. Further, each angle of the array transmitter corresponds to one reference receiving area of the array detector.

**In a possible implementation,** the first area and the second area shift in a first direction by using the reference transmitting area as an anchor point. The first direction includes but is not limited to a left-right direction, an up-down direction, a diagonal direction, or the like.

**In a possible implementation,** when the first area or the second area shifts relative to the reference transmitting area, an offset is a multiple of a unit width. The unit width is a minimum resolution unit of the array transmitter, for example, one light-emitting element.

**In an example of a shift case,** the first area and the reference transmitting area completely overlap, an offset between the second area and the reference transmitting area is a first distance, and the first distance is a multiple of the unit width. **In other words, the first area is the reference transmitting area, and the second area shifts relative to the reference transmitting area.**

**In another example of a shift case,** an offset between the first area and the reference transmitting area is a second distance, an offset between the second area and the reference transmitting area is a third distance, and the second distance and the third distance are different multiples of the unit width. In other words, **both the first area and the second area shift relative to the reference transmitting area, but the offsets are different.**

**In a possible implementation,** a temperature of an environment in which the array transmitter currently works is higher than a first temperature threshold. When the temperature is higher than or equal to the first temperature threshold, areas, of the array detector, on which the first echo signal and the second echo signal fall deviate from the reference transmitting area. In the foregoing implementation, when the temperature is higher than or equal to the first temperature threshold, the echo light spot may deviate from the reference transmitting area. Therefore, when the temperature is higher than or equal to the first threshold, the energy of the echo light spot can be received more accurately by dynamically shifting the transmitting area, to reduce an energy loss caused by the shift of the light spot, and improve the detection precision of the detection apparatus.

In a possible implementation, when the light spot energy of the echo signal corresponding to the transmit signal is not uniformly distributed, consistency between a plurality of channels that obtain the energy is poor. By dynamically shifting the transmitting area, the energy of the echo light spot can be equivalently uniform, and the channel consistency can be improved. A channel usually corresponds to one or more adjacent detection elements. For example, 3×3 detection elements are used as one pixel, and one pixel is one channel. Therefore, the 3×3 detection elements are considered as one channel.

In addition, the foregoing channel is a receiving channel. In some scenarios, the array transmitter may include a plurality of transmitting channels, and each transmitting channel corresponds to one or more adjacent light-emitting elements.

**In a possible implementation,** in the first direction, a pointing angle of the first detection signal and a pointing angle of the second detection signal fall within a first angle range, and the first angle range is some angles in a field of view range.

Optionally, the array transmitter may select, based on a horizontal angle, whether to use a dynamic receiving manner for detection at a specific horizontal angle.

In a possible implementation, some angles are angles close to an edge of the field of view.

In another possible implementation, the detection apparatus is further configured to transmit the fourth detection signal by using the reference transmitting area. A pointing angle of the fourth detection signal is located in an intermediate area of the field of view range.

**In a possible implementation,** maximum detection distances for the first detection signal and the second detection signal are less than a maximum detection distance for a third detection signal transmitted at a third moment. The third moment and the first moment are different (for example, long-range detection and short-range detection are performed with time distinction) or the same (for example, long-range detection and short-range detection are performed without time distinction). Similarly, the third moment and the first moment are different or the same.

A maximum detection distance is related to energy density and/or power of a signal. For example, energy density and/or power of the first detection signal are/is less than those/that of the third detection signal. For another example, energy density/power of the second detection signal is less than that of the third detection signal.

In this case, the array transmitter may determine, based on the long-range detection and the short-range detection, whether to use a dynamic transmitting manner. For example, during short-range detection, the detection signal is transmitted in a manner of dynamically switching the transmitting area.

Optionally, the third detection signal may also be transmitted in the manner of dynamically shifting the transmitting area.

**In a possible implementation,** the first detection signal and the second detection signal may be signals transmitted within a same period of detection time. Optionally, one period of detection time may be one slot, one beam position, one probe frame, or one probe subframe.

The slot is a minimum time unit in a detection process, and a plurality of detection signals may be transmitted in one slot. As shown in FIG. 10, N detection signals are transmitted in one slot (slot), and at least two transmitting areas are used to transmit the N detection signals.

### The following describes the apparatus provided in embodiments of this application.

An embodiment of this application provides an array detector. The detector includes a plurality of detection elements. The array detector is configured to implement the foregoing detection method, for example, the detection method in embodiments shown in FIG. 7 and FIG. 12.

An embodiment of this application provides an array transmitter. The array transmitter includes a plurality of light-emitting elements. The array transmitter is configured to implement the foregoing detection method, for example, the detection method in embodiments shown in FIG. 7 and FIG. 12.

An embodiment of this application further provides a detection controller. The detection controller includes a processor and a communication interface. The processor may generate a control signal, and the communication interface is configured to output the control signal generated by the processor.

Optionally, the control signal is used to control an array detector to implement the foregoing detection method.

Alternatively, optionally, the control signal is used to control an array transmitter to implement the foregoing detection method.

For example, the processor includes but is not limited to one or a combination of a plurality of a central processing unit (central processing unit, CPU), a microprocessor (microprocessor unit, MPU), an application-specific integrated circuit (Application-Specific Integrated Circuit, ASIC), a field programmable gate array (Field Programmable Gate Array, FPGA), a complex programmable logic device (Complex programmable logic device, CPLD), a coprocessor (assisting the central processing unit in completing corresponding processing and application), a microcontrol unit (Microcontroller Unit, MCU), and/or a neural-network processor (neural-network processing unit, NPU).

Optionally, the processor may implement the foregoing detection method by invoking computer instructions. In this case, the detection controller further includes a memory, and the memory is configured to store the computer instructions.

An embodiment of this application further provides a terminal. The terminal includes one or more of the foregoing array transmitter, array detector, detection apparatus (such as the detection apparatus 40), detection controller, and the like.

Optionally, the terminal may be an intelligent terminal such as a vehicle, an uncrewed aerial vehicle, or a robot, or a transportation means.

In descriptions of this application, orientation or position relationships indicated by the terms "center", "above", "below", "vertical", "horizontal", "inside", "outside", and the like are orientation or position relationships based on the accompanying drawings, and are merely intended for ease of describing this application and simplifying description, rather than indicating or implying that a described apparatus or element needs to have a specific orientation or needs to be construed and operated in a specific orientation. Therefore, such terms should not be understood as a limitation on this application.

In embodiments of this application, the term such as "example" or "for example" indicates giving an example, an illustration, or a description. Any embodiment or design scheme described as an "example" or "for example" in this application should not be explained as being more preferred or having more advantages than another embodiment or design scheme. To be precise, use of the term such as "example" or "for example" is intended to present a related concept in a specific manner.

In embodiments of this application, "at least one" means one or more, and "a plurality of" means two or more. "At least one of the following items (pieces)" or a similar expression thereof means any combination of these items, including any combination of singular items (pieces) or plural items (pieces). For example, at least one of a, b, or c may indicate: a, b, c, (a and b), (a and c), (b and c), or (a, b, and c), where a, b, and c may be singular or plural. The term "and/or" describes an association relationship between associated objects, and indicates that three relationships may exist. For example, A and/or B may indicate the following three cases: Only A exists, both A and B exist, and only B exists, where A and B may be singular or plural. The character "/" generally indicates an "or" relationship between the associated objects.

In addition, unless otherwise specified, ordinal numbers such as "first" and "second" in embodiments of this application are used to distinguish between a plurality of objects, but are not intended to limit an order, a time sequence, priorities, or degrees of importance of the plurality of objects. For example, the first detection signal and the second detection signal are merely for ease of description, but do not indicate differences in sources, sequences, degrees of importance, and the like of the first detection signal and the second detection signal.

According to the context, the term "when" used in the foregoing embodiments may be interpreted as "if", "after", "in response to determining", or "in response to detecting". The foregoing descriptions are merely optional embodiments of this application, but are not intended to limit this application. Any modification, equivalent replacement, improvement, or the like made within the concept and principle of this application shall fall within the protection scope of this application.

A person of ordinary skill in the art may understand that all or some of the steps of the embodiments may be implemented by hardware or a program instructing related hardware. The program may be stored in a computer-readable storage medium. The storage medium may be a read-only memory, a magnetic disk, an optical disc, or the like.

## Claims

1. A detection method, wherein the method is applied to an array detector, and the array detector comprises a plurality of detection elements; and the method comprises:
in a first area of the array detector, receiving a first echo signal and obtaining energy of the first echo signal, wherein the first echo signal corresponds to a first detection signal, and the first detection signal is sent at a first moment; and
in a second area of the array detector, receiving a second echo signal and obtaining energy of the second echo signal, wherein the second echo signal corresponds to a second detection signal, and the second detection signal is sent at a second moment, wherein
the first area and the second area are comprised in the array detector, the first area and the second area each comprise at least two detection elements, and the first area and the second area do not completely overlap.

2. The method according to claim 1, wherein
the first area and a reference receiving area completely overlap, an offset between the second area and the reference receiving area is a first distance, the first distance is a multiple of a unit width, and the unit width is a minimum resolution unit of the array detector; or
an offset between the first area and a reference receiving area is a second distance, an offset between the second area and the reference receiving area is a third distance, the second distance and the third distance are different multiples of a unit width, and the unit width is a minimum resolution unit of the array detector, wherein
the reference receiving area is an area in which the echo signal of the first detection signal and the echo signal of the second detection signal are received in a first environment condition, the reference receiving area is comprised in the array detector, and the first environment condition is a predefined working environment of the array detector.

3. The method according to claim 2, wherein a temperature of an environment in which the array detector currently works is higher than a first temperature threshold; and
when the temperature is higher than or equal to the first temperature threshold, an area, of the array detector, on which the first echo signal and the second echo signal fall deviates from the reference receiving area.

4. The method according to any one of claims 1 to 3, wherein in a first direction, a pointing angle of the first detection signal and a pointing angle of the second detection signal fall within a first angle range; and
the first angle range is some angles in a field of view range.

5. The method according to any one of claims 1 to 4, wherein maximum detection distances for the first detection signal and the second detection signal are less than a maximum detection distance for a third detection signal, and the third detection signal is transmitted at a third moment.

6. The method according to any one of claims 1 to 5, wherein the method further comprises:
obtaining, by the array detector, an output electrical signal based on the first echo signal and the second echo signal; and
obtaining, by the array detector, statistical histogram data based on the output electrical signal, wherein the statistical histogram data is used to obtain one or more pixels in a detection result of the field of view range.

7. The method according to any one of claims 1 to 6, wherein the method further comprises:
adjusting, by the array detector, an echo signal receiving area to the second area at a fourth moment, wherein the fourth moment is earlier than the second moment.

8. A detection method, wherein the method is applied to an array transmitter, and the array transmitter comprises a plurality of light-emitting elements; and the method comprises:
transmitting a first detection signal in a first area of the array transmitter, wherein the first detection signal corresponds to a first echo signal; and
transmitting a second detection signal in a second area of the array transmitter, wherein the second detection signal corresponds to a second echo signal, the first echo signal and the second echo signal are used to obtain statistical histogram data, and the statistical histogram data is used to obtain one or more pixels in a detection result of a field of view range, wherein
the first area and the second area are comprised in the array transmitter, the first area and the second area each comprise at least two light-emitting elements, and the first area and the second area do not completely overlap.

9. The method according to claim 8, wherein
the first area and a reference transmitting area completely overlap, an offset between the second area and the reference transmitting area is a first distance, the first distance is a multiple of a unit width, and the unit width is a minimum resolution unit of the array transmitter; or
an offset between the first area and a reference transmitting area is a second distance, an offset between the second area and the reference transmitting area is a third distance, the second distance and the third distance are different multiples of a unit width, and the unit width is a minimum resolution unit of the array transmitter, wherein
a third echo signal corresponding to a fourth detection signal transmitted in the reference transmitting area in a first environment condition falls within a reference receiving area of an array detector, and the reference receiving area is used to receive the third echo signal and obtain energy of the third echo signal.

10. The method according to claim 8 or 9, wherein a temperature of an environment in which the array transmitter currently works is higher than a first temperature threshold; and
when the temperature is higher than or equal to the first temperature threshold, an area, of the array detector, on which the first echo signal and the second echo signal fall deviates from the reference transmitting area.

11. The method according to any one of claims 8 to 10, wherein in a first direction, a pointing angle of the first detection signal and a pointing angle of the detection signal fall within a first angle range; and
the first angle range is some angles in the field of view range.

12. The method according to any one of claims 8 to **11,** wherein the method further comprises:
transmitting, by the array detector, a third detection signal at a third moment, wherein a maximum detection distance for the first detection signal and a maximum detection distance for the second detection signal are less than a maximum detection distance for the third detection signal.

13. An array detector, wherein the array detector comprises a plurality of detection elements; and
the array detector is configured to implement the method according to any one of claims 1 to 7.

14. An array transmitter, wherein the array transmitter comprises a plurality of light-emitting elements; and
the array transmitter is configured to implement the method according to any one of claims 8 to 12.

15. A detection apparatus, wherein the detection apparatus comprises a transmitter and an array detector, and the transmitter is configured to: transmit a first detection signal at a first moment and transmit a second detection signal at a second moment; and
the array detector is the array detector according to claim 13.

16. A detection apparatus, wherein the detection apparatus comprises an array transmitter and a detector, and the array transmitter is the array transmitter according to claim 14; and
the detector is configured to: receive a first echo signal and receive a second echo signal.

17. A terminal, wherein the terminal comprises the array detector according to claim 13, or comprises the array transmitter according to claim 14, or comprises the detection apparatus according to claim 15, or comprises the detection apparatus according to claim 16.

18. The terminal according to claim 17, wherein the terminal is a vehicle, an uncrewed aerial vehicle, or a robot.
